# EUROPÄISCHE PATENTSCHRIFT

(11) **EP 3 113 323 B1**
(45) Veröffentlichungstag und Bekanntmachung des Hinweises auf die Patenterteilung: **27.03.2019**
(21) Anmeldenummer: 15175226.8
(22) Anmeldetag: 03.07.2015
(51) Int. Cl.: H02J 7/02, H04L 12/28

(54) **INTERAKTIONSVORRICHTUNG MIT INTEGRIERTEN FUNKTIONALITÄTEN ZUR ERZEUGUNG, VERARBEITUNG UND EIN- UND AUSGABE VON TRIGGERN**
INTERACTION DEVICE WITH INTEGRATED FUNCTIONALITIES FOR GENERATING, PROCESSING AND INPUT AND OUTPUT OF TRIGGERS
DISPOSITIF D'INTERACTION AYANT DES FONCTIONNALITES INTEGREES DESTINEES A GENERER, TRAITER ET EMETTRE ET RECEVOIR DES DECLENCHEURS

(43) Veröffentlichungstag der Anmeldung: 04.01.2017
(73) Patentinhaber: Deutsche Telekom AG, 53113 Bonn (DE)
(72) Erfinder: Roos, Andreas, 64354 Reinheim (DE); Brandt, Thoralf, 14612 Falkensee (DE); Drüsedow, Steffen, 16727 Oberkrämer (DE)
(74) Vertreter: Vossius & Partner Patentanwälte Rechtsanwälte mbB

(56) Entgegenhaltungen:
- WO-A1-2015/017274
- US-A1- 2010 201 313
- US-A1- 2013 249 479

## Beschreibung

### Technisches Gebiet

Die Erfindung betrifft ein elektronisches Gerät mit integrierten Funktionalitäten zur Erzeugung, Verarbeitung und Ein- und Ausgabe von Triggern durch integrierte und externe Hardware, nachfolgend "Interaktionsvorrichtung" genannt. Die Erfindung betrifft insbesondere eine Interaktionsvorrichtung, die modular erweiterbare Software-Schnittstellen aufweist. Dabei kann eine Interaktion das drahtlose Laden von mobilen Kommunikations- und Unterhaltungsgeräten (z.B. Mobiltelefonen, Tablets, mobilen Gadgets) betreffen.

### Problembeschreibung

Kommt ein Mensch (im Folgenden "Benutzer" genannt) beispielsweise von der Arbeit nach Hause, so erledigt er üblicherweise zunächst eine Vielzahl von Handgriffen, die einen gewissen Aufwand darstellen: So ist beispielsweise die Heizung einzustellen oder das Licht anzuschalten. Gegebenenfalls müsste er beim Betreten der Wohnung zunächst eine Alarmanlage ausstellen. Weiterhin könnte es sein, dass der Benutzer regelmäßig das Radio anschaltet und seinen Lieblingssender einstellt.

Es besteht also Bedarf an einer Vorrichtung, die einem Benutzer solche üblichen Handgriffe abnimmt oder deren Ausführung erleichtert.

Aufgabe der vorliegenden Erfindung ist es daher die Bereitstellung einer Vorrichtung, die einem Benutzer übliche Handgriffe abnimmt oder deren Ausführung erleichtert. Diese Aufgabe wird mit der Vorrichtung gemäß den vorliegenden Patentansprüchen gelöst.

### Beschreibung der Erfindung

Die erfindungsgemäße Vorrichtung bietet die Möglichkeit, Trigger auszulösen oder aus der Wohnumgebung zu empfangen.

Ein Trigger kann beispielsweise das Aufladen elektronischer Geräte betreffen: In der heutigen Zeit bringt jedes elektronische Gerät ein eigenes Ladegerät mit einem nur zu diesem Gerät passenden Ladekabel mit. Nach einigen Tagen ist der Akku leer, und die Suche nach dem Ladegerät beginnt.

Mit dieser Erfindung bekommen die Geräte einen festen Platz im Haushalt, an dem sie geladen werden können. Das Laden erfolgt drahtlos, d.h. das elektronische Gerät muss nur in einen bestimmten Raumbereich, beispielweise eine Ablage, gelegt werden und das Laden beginnt. Sollte ein Gerät das drahtlose Laden nicht unterstützen, kann es mittels kleiner kostengünstiger Adapter aufgerüstet werden. Legt man zusätzlich zum Mobiltelefon noch den Autoschlüssel mit einem drahtlosen Transponder in den vorbestimmten Raumbereich, beispielweise die Ablage, können damit Aktionen im Haus ausgelöst werden, beispielsweise fährt die Heizung auf Wohlfühltemperatur hoch, die Lieblingslampe schaltet ein und der Lieblingsradiosender des Benutzers wird abgespielt. Wenn der Benutzer das Haus verlässt, nimmt er nur den Schlüssel aus der Ablage und sein Haus fährt, gesteuert von der erfindungsgemäßen Interaktionsvorrichtung, die Heizung herunter und schaltet alle Lampen aus.

Durch sein Erscheinungsbild und die Ausführung ist die Interaktionsvorrichtung zur direkten Integration in das Wohnumfeld des Benutzers vorgesehen und geeignet.

In die Interaktionsvorrichtung integriert ist eine Verarbeitungseinheit, welche alle Funktionalitäten der Interaktionsvorrichtung steuert und koordiniert. Diese Verarbeitungseinheit basiert auf Prozessor(en), RAM, permanenten Speicher sowie Netzwerkschnittstelle(n) zur Einbindung in die lokale Netzwerkumgebung des Benutzers. Darüber hinaus verfügt es über Hardware-Schnittstellen, mittels denen Ereignisse aus der Umgebung erfasst sowie selbst erzeugte Trigger an die Umgebung signalisiert werden können. Das beinhaltet insbesondere auch NFC/RFID Sensorik, kann je nach Ausführungsart jedoch auch um weitere Technologien (z.B. Bluetooth 4.0) erweitert werden. Die Verarbeitungseinheit ist derart gestaltet, dass ihre Funktionen zur Laufzeit durch Softwaremodule modifiziert bzw. erweitert werden können.

In einem Raumbereich, beispielsweise auf der Oberfläche, bietet die Interaktionsvorrichtung Platz für die Aufnahme mehrerer mobiler Geräte und kann vorzugsweise je nach Ausführungsart 1 bis N dieser Geräte gleichzeitig drahtlos laden.

Neben der optionalen Ladefunktion für mobile Geräte ist die Hauptfunktion der Interaktionsvorrichtung die Erfassung, Analyse, Verarbeitung und Erzeugung von Triggern. Somit kann es zur innovativen Erweiterung unterschiedlichster Automatisierung-Szenarien durch sehr intuitive, nicht-technische Interaktionsmuster benutzt werden. So kann z.B. bereits durch das Einlegen eines mobilen Gerätes in eine Ladezone ein Trigger erzeugt werden, der sowohl über eine der Hard- oder Software-Schnittstellen ausgegeben, als auch durch ein Verarbeitungsmodul direkt auf dem Gerät zum Starten einer Aktion (etwa das Starten eines Synchronisationsprozesses) führen kann.

Durch die Offenheit hinsichtlich der erzeug- und verarbeitbaren Trigger bildet die im Folgenden beschriebene Interaktionsvorrichtung eine ideale Ergänzung für diverse Systeme zur Automatisierung von Prozessen im Haus, mittels minimaler natürlicher Interaktionen mit dem Benutzer.

Die hier beschriebene Lösung kombiniert eine Reihe von Funktionalitäten deren einzelne Aspekte teilweise durch Patentschriften bereits in ähnlicher Form beschreiben wurden. So z.B. in:
- WO 2012 011 146: Cradle Device, Portable Terminal, Information Processing System, And Data Transfer Method,
- KR 10 2012 0050 862: Mobile Terminal And A Screen Display Control Method Thereof Capable Of Increasing Availability
- US 2011 0289 238: Apparatus, and associated method, for facilitating synchronization of a wireless device
- US 2010 0042 671: Server Embedded In Device Charging Cradle
- JP 2009 169 460: Automated Content Copying System
- JP 2006 004 261: Portable Information Terminal, Cradle Device For Portable Information Terminal, And Information Terminal System

Keine der o.g. Patentschriften weist jedoch eine vergleichbare Generik im Lösungsansatz sowie ein derart breites Anwendungsfeld wie die hier beschriebene integrierte Lösung auf.

Die US 2013/249479 A1, WO 2015/017274 A1 oder US 2010/201313 A1 beschreiben Verfahren und Systeme zum drahtlosen Energieübertragung zu mobilen Kommunikationsgeräten.

Ein Aspekt der Erfindung betrifft eine Interaktionsvorrichtung, die eine Ladeeinheit, eine modulare Verarbeitungseinheit und mindestens eine Schnittstelle für die Interaktion mit externen Einrichtungen aufweist.

Dabei ist die Ladeeinheit mit der modularen Verarbeitungseinheit verbunden, zum drahtlosen Laden eines oder mehrerer elektrischer Geräte ausgestaltet, zum Detektieren, ob sich ein zum drahtlosen Laden geeignetes elektrisches Gerät in einem räumlichen Bereich um die Ladeeinheit befindet, in dem ein drahtloses Laden elektrischer Geräte durch die Ladeeinheit möglich ist, ausgestaltet, und zum Senden einer Information an die modulare Verarbeitungseinheit, sobald ein zum drahtlosen Laden geeignetes elektrisches Gerät in dem räumlichen Bereich um die Ladeeinheit, in dem ein drahtloses Laden elektrischer Geräte durch die Ladeeinheit möglich ist, hineingelangt ist oder aus diesem Bereich entfernt worden ist, ausgestaltet.

Ferner ist dabei die modulare Verarbeitungseinheit als Laufzeitumgebung für in der modularen Verarbeitungseinheit installierte Software-Module ausgestaltet, zum Empfangen, Erfassen, Analysieren und Verarbeiten von Informationen, die von der Ladeeinheit an die modulare Verarbeitungseinheit gesendet worden sind, mittels der Software-Module ausgestaltet, und zum Senden von beim Verarbeiten der genannten Informationen gegebenenfalls entstehenden Daten und/oder Trigger an zumindest eine Schnittstelle ausgestaltet.

Zudem ist dabei die mindestens eine Schnittstelle mit der modularen Verarbeitungseinheit verbunden, zum Empfangen von durch die modulare Verarbeitungseinheit gesendeten Daten und/oder Trigger ausgestaltet, und zur Weiterleitung der Daten und/oder Trigger an zumindest eine externe Einrichtung ausgestaltet.

Ein zum drahtlosen Laden geeignetes elektrisches Gerät kann dabei beispielsweise ein Smart Device, Smartphone, Mobiltelefon, Tablet Computer und/oder mobiles Gadgets sein. In einer Ausführungsform der Interaktionsvorrichtung ist die Ladeeinheit ferner ausgestaltet zum Empfangen von Steuersignalen bezüglich eines Ladevorgangs von der modularen Verarbeitungseinheit, wobei durch die Steuersignale insbesondere das Starten und/oder Beenden des Ladevorgangs gesteuert werden kann, und/oder zum Senden von Statusinformationen über aktuelle Ladevorgänge an die modulare Verarbeitungseinheit.

In einer Ausführungsform der Interaktionsvorrichtung ist die modulare Verarbeitungseinheit lokal in der Interaktionsvorrichtung angeordnet, oder die modulare Verarbeitungseinheit ist teilweise lokal und teilweise extern, vorzugsweise auf einem externen Server, angeordnet.

In einer bevorzugten Ausführungsform der Interaktionsvorrichtung weist jedes der in der modularen Verarbeitungseinheit installierten Module einen Satz von Funktionen für die Steuerung der zumindest einen externen Einrichtung auf.

Die modulare Verarbeitungseinheit ist ausgestaltet: zum dynamischen Aktivieren und Deaktivieren von Modulen, und zum Installieren und Deinstallieren während des laufenden Betriebs.

In einer Ausführungsform der Interaktionsvorrichtung ist zumindest eine der Schnittstellen als Software-Schnittstelle (API) ausgestaltet und/oder zumindest eine der Schnittstellen als Hardware-Schnittstelle (I/O-Port) ausgestaltet.

In einer Ausführungsform der Interaktionsvorrichtung ist die Verbindung der Schnittstelle(n) mit der modularen Verarbeitungseinheit jeweils bi-direktional. Dabei ist/sind die Schnittstelle(n) ausgestaltet: zum Empfang von Daten, die von der zumindest einen externen Einrichtung gesendet worden sind, und zur Weiterleitung der von der zumindest einen externen Einrichtung gesendeten Daten an die modulare Verarbeitungseinheit.

In einer Ausführungsform der Interaktionsvorrichtung kann jedes der installierten Software-Module die Interaktionsvorrichtung um zusätzliche, vorzugsweise bi-direktionale, Software-Schnittstellen (APIs) erweitern.

In einer Ausführungsform der Interaktionsvorrichtung können externe Einrichtungen ein drahtloses oder drahtgebundenes LAN-System, eine Musikanlage, eine Alarmanlage, die Heizung eines Hauses/Zimmers, die Beleuchtungsanlage eines Hauses/Zimmers oder Netzwerkkomponenten in einer Cloud sein. Über die Netzwerkkomponenten in der Cloud können dabei beispielsweise Sender auf einem Heim-TV oder Radio oder die Bandbreite des Internetzugangs gesteuert werden.

Die Interaktionsvorrichtung weist ferner eine Funktrigger-Empfangseinheit auf. Dabei ist die Funktrigger-Empfangseinheit mit der modularen Verarbeitungseinheit verbunden ist, zum Empfang von Daten und/oder Triggern mittels drahtloser Nahbereichsfunktechnologie(n) ausgestaltet, und zum Weiterleiten empfangener Daten und/oder Trigger an die modulare Verarbeitungseinheit ausgestaltet. Ferner ist dabei die modulare Verarbeitungseinheit zum Erfassen, Analysieren und Verarbeiten der empfangenen Daten und/oder Trigger mittels der Software-Module ausgestaltet, und zum Senden von gegebenenfalls beim Verarbeiten der empfangenen Daten und/oder Trigger entstehenden Daten und/oder Trigger an die mindestens eine Schnittstelle ausgestaltet.

In einer Ausführungsform der Interaktionsvorrichtung ist/sind die drahtlose(n) Nahbereichsfunktechnologie(n) als Nahfeldkommunikation (Near Field Communication, NFC) und/oder als RFID-Technologie (Radio-Frequency Identification) und/oder als Bluetooth, insbesondere Bluetooth 4.0, und/oder mittels zukünftiger Funktechnologien realisiert. Ferner weist dabei die Funktrigger-Empfangseinheit Hardwarekomponenten, beispielsweise eine Sensorik, zum Empfang von Signalen mittels der Nahbereichsfunktechnologie(n) auf.

Die Funktrigger-Empfangseinheit ist so ausgestaltet, dass ein Trigger ausgelöst wird, wenn die Funktrigger-Empfangseinheit einen zur Kommunikation mittels drahtloser Nahbereichsfunktechnologie(n) fähigen Interaktionsauslöser detektiert. Dabei kann der Interaktionsauslöser beispielsweise ein Smart Device, ein Smartphone, ein Mobiltelefon, ein Tablet Computer, ein mobiles Gadget oder ein Transponder, vorzugsweise ein RFID-Chip oder ein NFC-Tag, sein.

In einer Ausführungsform der Interaktionsvorrichtung ist die Funktrigger-Empfangseinrichtung zum Erkennen einer Identifikationsnummer des Interaktionsauslösers ausgestaltet. Dabei sind einem Interaktionsauslöser ein oder mehrere Trigger zugeordnet, und der eine oder die mehreren einem Interaktionsauslöser zugeordneten Trigger wird/werden nur dann ausgelöst, wenn für den Interaktionsauslöser in der Interaktionsvorrichtung eine Identifikationsnummer hinterlegt ist.

Falls für den Interaktionsauslöser in der Interaktionsvorrichtung keine Identifikationsnummer hinterlegt ist, wird eine Interaktion mit dem Benutzer zur der Interaktionsvorrichtung veranlasst, damit dieser für die neue Identifikationsnummer gegebenenfalls Aktionen festlegen kann.

In einer Ausführungsform der Interaktionsvorrichtung ist die Interaktionsvorrichtung so ausgestaltet, dass mittels der Identifikationsnummer eines Interaktionsauslösers gesteuert wird, welches der in der modularen Verarbeitungseinheit installierten Module angesprochen wird, sobald ein Interaktionsauslöser von der Funktrigger-Empfangseinrichtung erkannt wird. Dabei ist vorzugsweise die Interaktionsvorrichtung so ausgestaltet, dass mittels der Identifikationsnummer eines Interaktionsauslösers bestimmt wird, welcher Satz von Funktionen eines in der modularen Verarbeitungseinheit installierten Moduls angesprochen wird, sobald ein Interaktionsauslöser von der Funktrigger-Empfangseinrichtung erkannt wird.

In einer Ausführungsform weist die Interaktionsvorrichtung ferner eine Ablage auf, beispielsweise eine schalenförmige Ablage, zum Ablegen von zum drahtlosen Laden geeigneten elektrischen Geräten und/oder zum Ablegen von Interaktionsauslösern.

Ein weiterer Aspekt der Erfindung betrifft ein Verfahren zur Interaktion eines zum drahtlosen Laden geeigneten elektrischen Geräts mit zumindest einer externen Einrichtung mittels der erfindungsgemäßen Interaktionsvorrichtung. Das Verfahren weist folgende Schritte auf:
a) Detektieren, mittels der Ladeeinheit, ob sich ein zum drahtlosen Laden geeignetes elektrisches Gerät in einem räumlichen Bereich um die Ladeeinheit befindet, in dem ein drahtloses Laden elektrischer Geräte durch die Ladeeinheit möglich ist;
b) Senden einer Information von der Ladeeinheit an die modulare Verarbeitungseinheit, sobald ein zum drahtlosen Laden geeignetes elektrisches Gerät in den räumlichen Bereich um die Ladeeinheit, in dem ein drahtloses Laden elektrischer Geräte durch die Ladeeinheit möglich ist, hineingelangt ist oder aus diesem Bereich entfernt worden ist;
c) Empfangen, Erfassen, Analysieren und Verarbeiten, mittels in der modularen Verarbeitungseinheit installierter Software-Module, von Informationen, die von der Ladeeinheit an die modulare Verarbeitungseinheit gesendet worden sind;
d) Senden der beim Verarbeiten der in Schritt c) genannten Informationen gegebenenfalls entstehenden Daten und/oder Trigger von der modularen Verarbeitungseinheit an zumindest eine Schnittstelle;
e) Empfangen, mittels zumindest einer Schnittstelle, von durch die modulare Verarbeitungseinheit gesendeten Daten und/oder Triggern;
f) Weiterleiten, durch die in Schritt e) genannte(n) Schnittstelle(n), der Daten und/oder Trigger an zumindest eine externe Einrichtung.

Die Erfindung wird nachstehend anhand von Beispielen und der Zeichnung erläutert.

Es zeigen:
- Fig. 1:: Interaktionsvorrichtung mit Umgebung;
- Fig. 2:: Schematische Darstellung der Funktionsblöcke der Interaktionsvorrichtung;
- Fig. 3:: Sequenzdiagramm des Nutzungsszenarios "Benutzer kommt von der Arbeit nach Hause".

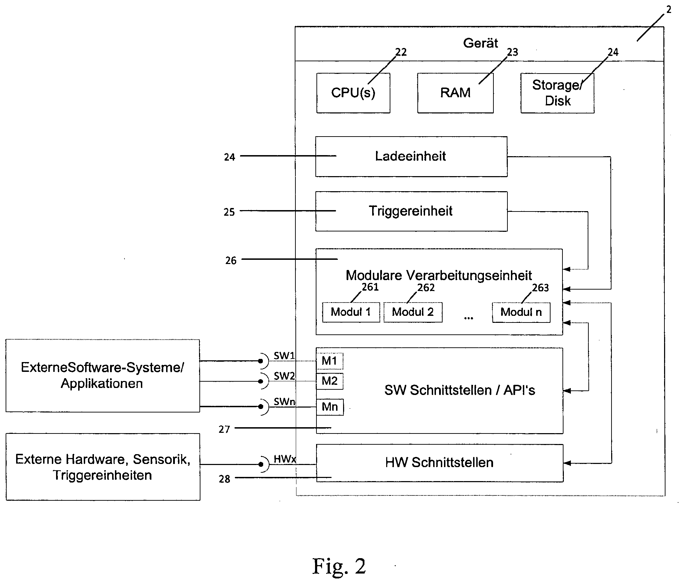

Fig. 2 zeigt die grundlegenden Funktionsblöcke einer Interaktionsvorrichtung mit Lade- und Triggerstation und zeigt deren grundsätzliche Interaktionen.

Die Basis der elektronischen Interaktionsvorrichtung (im Folgenden auch als "System" bezeichnet) bilden die CPU(s), der Arbeitsspeicher und der persistente Speicher, auf dem sowohl ein Betriebssystem, als auch die ausführbaren Softwarekomponenten des Systems installiert sind. Die zentrale Komponente des Systems ist die Modulare Verarbeitungseinheit. Diese Komponente ist mit allen anderen Sub-Komponenten verknüpft und steuert die Ein- und Ausgabeaktivitäten des Gesamtsystems. Die eigentliche Verarbeitungslogik wird dabei durch Software-Module realisiert, für die die Modulare Verarbeitungseinheit die Laufzeitumgebung bildet. Sie erlaubt das dynamische Aktivieren/Deaktivieren sowie die Installation und Deinstallation von Modulen während des laufenden Betriebes. Jedes der installierten Verarbeitungsmodule kann dabei die Software- Schnittstellen des Systems um zusätzliche bi-direktionale API's erweitern und somit die Kompatibilität des Systems mit seiner Umgebung erhöhen.

Die drahtlose Ladefunktionalität für ein oder mehrere zu ladende Geräte, die an den entsprechenden Ladepositionen, beispielsweise auf der Oberfläche der Interaktionsvorrichtung, positioniert werden, wird durch die Ladeeinheit realisiert. Diese Einheit beinhaltet die dazu nötigen Hardwarekomponenten. Die Ladeeinheit ist mit der der Modularen Verarbeitungseinheit verbunden und liefert Statusinformationen zu aktuellen Ladevorgängen, welche dort ebenfalls als Eingabetrigger behandelt werden können.

Die Triggereinheit beinhaltet Hardwarkomponenten für die Interaktion mit drahtlosen Nahbereichs- Funktechnologien (insbesondere NFC, RFID und je nach Ausführungsvariante auch Bluetooth 4.0). Sie ist ebenfalls mit der Modularen Verarbeitungseinheit verbunden und leitet sämtliche über den Nahbereichs-Funk erhaltenen Daten und Trigger unmittelbar an diese weiter.

Die Aufgabe der Modularen Verarbeitungseinheit ist es, sämtliche empfangenen Daten zu erfassen, zu analysieren, algorithmisch zu verarbeiten, ggf. daraus resultierende Daten bzw. Trigger zu erzeugen und diese zur Ausgabe weiterzuleiten.

Die Ausgabe der in der Modularen Verarbeitungseinheit erzeugten Trigger bzw. Daten kann dabei sowohl über die API's der Software-Schnittstellen, als auch über im Gerät integrierte Hardware Schnittstellen (I/O Ports) erfolgen.

Sowohl die Software- als auch die Hardware Schnittstellen sind vorzugsweise bi-direktional mit der Modularen Verarbeitungseinheit verbunden, so dass sie sowohl zur Ausgabe als auch zur Eingabe von Daten und Triggern benutzt werden können.

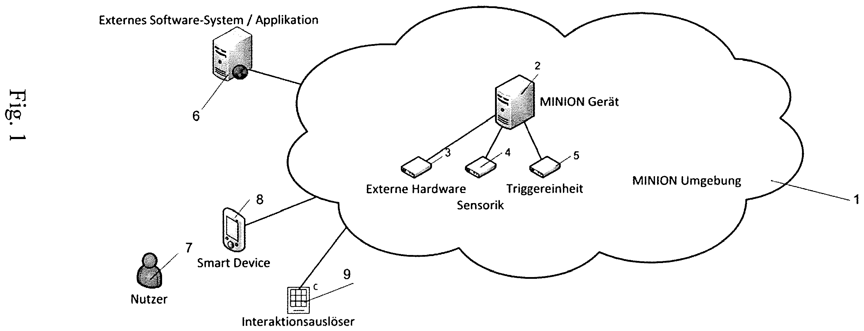

In Fig. 1 ist die Umgebung 1 der Interaktionsvorrichtung dargestellt. Die Umgebung 1 umfasst die Interaktionsvorrichtung 2, sowie die an die Interaktionsvorrichtung 2 angeschlossene externe Hardware 3, Sensorik 4 und Triggereinheiten 5. Die Umgebung 1 der Interaktionsvorrichtung 2 kann mit externen Software-Systemen / Applikationen 6 kommunizieren. Ein Nutzer 7 kann mit einem Smart Device 8 und / oder einem Trigger 9 mit der Umgebung 1 der Interaktionsvorrichtung 2 kommunizieren. Die Interaktionsvorrichtung 2 beinhaltet die folgenden Funktionsblöcke CPU(s) 21, RAM 22, Festplatte 23, Ladeeinheit 24, interne Triggereinheit 25, modulare Verarbeitungseinheit 26, Software-Schnittstellen 27, sowie Hardware-Schnittstellen 28, welche in Fig. 2 dargestellt sind. Die modulare Verarbeitungseinheit 26, kann mehrere Module, z. B. Modul 1 261, Modul 2 262, Modul 3 263 enthalten. Die Interaktionsvorrichtung 2, sowie angeschlossene externe Hardware 3, Sensorik 4 und Triggereinheiten 5 können in der Interaktionseinheit 10 integriert sein. Die Interaktionseinheit könnte z. B. eine Schale sein, welche als dekoratives Element einen Platz in der Wohnumgebung hat.

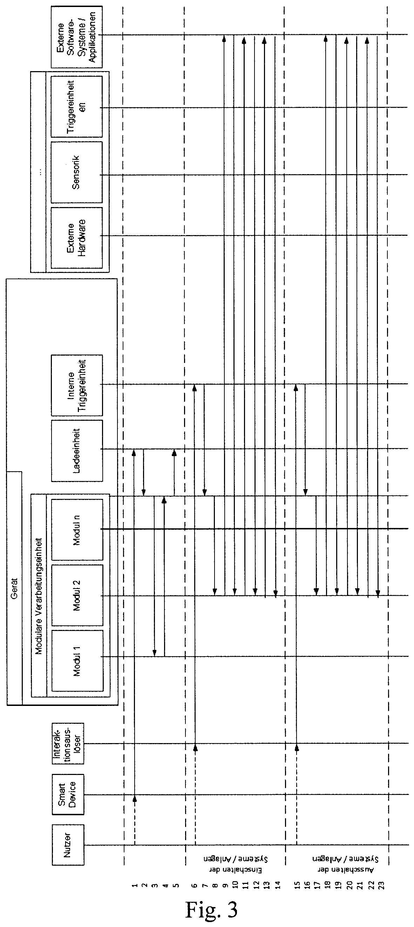

Anhand des Sequenzdiagramms in Fig. 3 wird das Nutzungsszenario "Benutzer kommt von der Arbeit nach Hause" beschrieben. Der Nutzer 7 legt nach Ankunft in der Wohnung das Smart Device 8, sowie den Wohnungsschlüssel mit einem integrierten Interaktionsauslöser (z.B. NFC Tag) 9 auf die Interaktionseinheit 10. Die Ladeeinheit 24 erkennt das Auflegen des Smart Device 8 in Schritt 1 des Sequenzdiagramms in Fig. 3 und informiert in Schritt 2 die modulare Verarbeitungseinheit 26, welche in Schritt 3 das Modul 1 261 über die Tatsache, dass ein Smart Device mit Ladefunktion aufgelegt wurde informiert. Das Modul 1 261 entscheidet, dass der Ladevorgang begonnen werden soll und startet den Ladevorgang durch eine Information an die modulare Verarbeitungseinheit 26, in Schritt 4, welche die Ladeeinheit 24 in Schritt 5 informiert.

Das Auflegen des Wohnungsschlüssels mit dem integrierten Interaktionsauslöser 9 wird durch die interne Triggereinheit 25 in Schritt 6 erfasst und in Schritt 7 wird ein Trigger erzeugt/angestoßen. Die Triggereinheit 25 übergibt die Information, dass ein Interaktionsauslöser aufgelegt wurde, an die modulare Verarbeitungseinheit 26 in Schritt 7. In Schritt 8 gibt die modulare Verarbeitungseinheit 26 die Information über einen aufgelegten Interaktionsauslöser an das Modul 2 262. Das Modul 2 262 hat ein Funktionsset, welches für die Steuerung unterschiedlichster Anlagen / Systeme gedacht ist. Welches Funktionsset angesprochen wird, wird mittels der im Gerät 2 konfigurierten Identifikationsnummer des jeweiligen Interaktionsauslösers 9 (z.B. UID eines NFC Tags) gesteuert.

In diesem Beispiel können die zu steuernden Anlagen, eine Alarmanlage, ein WLAN System und eine Musikanlage sein. In Schritt 9 stößt das Modul 2 262 das Ausschalten der Alarmanlage an. Das erfolgreiche Ausschalten der Alarmanlage bestätigt die Alarmanlage in Schritt 10. In Schritt 11 stößt das Modul2 262 das Einschalten des WLAN Systems an. Das WLAN System (z. B. ein WLAN Router) bestätigt das erfolgreiche Einschalten in Schritt 12. In Schritt 13 stößt das Modul 2 262 das Einschalten der Musikanlage an. Darüber hinaus wird der Musikanlage die Information mitgeteilt, welche Playlist abgespielt werden soll. Die Playlist kann eine Playlist auf der Musikanlage sein, oder auch von einer Musikplattform im Internet, welche durch die Musikanlage abgefragt wird. In Schritt 14 bestätigt die Musikanlage das Einschalten der Musikanlage.

Das Entfernen des Wohnungsschlüssels mit integriertem Interaktionsauslöser 9 wird durch die interne Triggereinheit 25 in Schritt 15 erfasst und ein entsprechender Trigger, dass ein Interaktionsauslöser entfernt wurde, wird erzeugt. Die Triggereinheit 25 übergibt diesen Trigger an die modulare Verarbeitungseinheit 26 in Schritt 16. In Schritt 17 gibt die modulare Verarbeitungseinheit 26 die Information über einen entfernten Interaktionsauslöser an das Modul 2 262. Das Modul 2 262 hat ein Funktionsset, welches für die Steuerung unterschiedlichster Anlagen / Systeme gedacht ist. Welches Funktionsset angesprochen wird, wird mittels der in der Interaktionsvorrichtung 2 konfigurierten Identifikationsnummer des jeweiligen Interaktionsauslösers 9 (z.B. UID eines NFC Tags) gesteuert.

In diesem Beispiel können die zu steuernden Anlagen eine Alarmanlage, ein WLAN System und eine Musikanlage sein. In Schritt 18 stößt das Modul 2 262 das Einschalten der Alarmanlage an. Das erfolgreiche Einschalten der Alarmanlage bestätigt die Alarmanlage in Schritt 19. In Schritt 20 stößt das Modul 2 262 das Ausschalten des WLAN System an. Das WLAN System (z. B. ein WLAN Router) bestätigt das bevorstehende Ausschalten in Schritt 21. In Schritt 22 stößt das Modul 2 262 das Ausschalten der Musikanlage an. In Schritt 23 bestätigt die Musikanlage das bevorstehende Ausschalten der Musikanlage.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen. Insbesondere umfasst die Erfindung ebenfalls Ausführungsformen mit jeglicher Kombination von Merkmalen, die vorstehend zu verschiedenen Aspekten und/oder Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend nicht genannt sind.

Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Alle Bezugszeichen in den Ansprüchen sind nicht als den Umfang der Ansprüche einschränkend zu verstehen.

## Patentansprüche

1. Interaktionsvorrichtung, aufweisend:
eine Ladeeinheit (24);
eine modulare Verarbeitungseinheit (26);
mindestens eine Schnittstelle (27, 28) für die Interaktion mit externen Einrichtungen;
wobei die Ladeeinheit:
mit der modularen Verarbeitungseinheit verbunden ist,
zum drahtlosen Laden eines oder mehrerer elektrischer Geräte ausgestaltet ist,
zum Detektieren, ob sich ein zum drahtlosen Laden geeignetes elektrisches Gerät in einem räumlichen Bereich um die Ladeeinheit befindet, in dem ein drahtloses Laden elektrischer Geräte durch die Ladeeinheit möglich ist, ausgestaltet ist,
zum Senden einer Information an die modulare Verarbeitungseinheit, sobald ein zum drahtlosen Laden geeignetes elektrisches Gerät in den räumlichen Bereich um die Ladeeinheit, in dem ein drahtloses Laden elektrischer Geräte durch die Ladeeinheit möglich ist, hineingelangt ist oder aus diesem Bereich entfernt worden ist, ausgestaltet ist;
wobei die modulare Verarbeitungseinheit:
als Laufzeitumgebung für in der modularen Verarbeitungseinheit installierte Software-Module ausgestaltet ist,
zum Empfangen, Erfassen, Analysieren und Verarbeiten von Informationen, die von der Ladeeinheit an die modulare Verarbeitungseinheit gesendet worden sind, mittels der Software-Module ausgestaltet ist,
zum Senden von beim Verarbeiten der genannten Informationen gegebenenfalls entstehenden Daten und/oder Trigger an zumindest eine Schnittstelle ausgestaltet ist; und
wobei die mindestens eine Schnittstelle:
mit der modularen Verarbeitungseinheit verbunden ist,
zum Empfangen von durch die modulare Verarbeitungseinheit gesendeten Daten und/oder Triggern ausgestaltet ist, und
zur Weiterleitung der Daten und/oder Trigger an zumindest eine externe Einrichtung ausgestaltet ist;
**dadurch gekennzeichnet, dass** die modulare Verarbeitungseinheit ausgestaltet ist:
zum dynamischen Aktivieren und Deaktivieren von Modulen, und
zum Installieren und Deinstallieren während des laufenden Betriebs.

2. Interaktionsvorrichtung nach Anspruch 1, wobei ein zum drahtlosen Laden geeignetes elektrisches Gerät beispielsweise ein Smart Device, Smartphone, Mobiltelefon, Tablet Computer und/oder mobiles Gadget sein kann.

3. Interaktionsvorrichtung nach Anspruch 1 oder 2,
wobei die Ladeeinheit ferner ausgestaltet ist:
zum Empfangen von Steuersignalen bezüglich eines Ladevorgangs von der modularen Verarbeitungseinheit, wobei durch die Steuersignale insbesondere das Starten und/oder Beenden des Ladevorgangs gesteuert werden kann; und/oder
zum Senden von Statusinformationen über aktuelle Ladevorgänge an die modulare Verarbeitungseinheit.

4. Interaktionsvorrichtung nach einem der Ansprüche 1 bis 3,
wobei die modulare Verarbeitungseinheit lokal in der Interaktionsvorrichtung angeordnet ist, oder
wobei die modulare Verarbeitungseinheit teilweise lokal und teilweise extern, vorzugsweise auf einem externen Server, angeordnet ist.

5. Interaktionsvorrichtung nach einem der Ansprüche 1 bis 4, wobei jedes der in der modularen Verarbeitungseinheit installierten Module einen Satz von Funktionen für die Steuerung der zumindest einen externen Einrichtung aufweist.

6. Interaktionsvorrichtung nach einem der Ansprüche 1 bis 5, wobei zumindest eine der Schnittstellen als Software-Schnittstelle (API) ausgestaltet ist und/oder zumindest eine der Schnittstellen als Hardware-Schnittstelle ausgestaltet ist.

7. Interaktionsvorrichtung nach einem der Ansprüche 1 bis 6,
wobei die Verbindung der Schnittstelle(n) mit der modularen Verarbeitungseinheit jeweils bi-direktional ist; und
wobei die Schnittstelle(n) ausgestaltet ist/sind:
zum Empfang von Daten, die von der zumindest einen externen Einrichtung gesendet worden sind, und
zur Weiterleitung der von der zumindest einen externen Einrichtung gesendeten Daten an die modulare Verarbeitungseinheit.

8. Interaktionsvorrichtung nach einem der Ansprüche 1 bis 7, wobei jedes der installierten Software-Module die Interaktionsvorrichtung um zusätzliche, vorzugsweise bi-direktionale, Software-Schnittstellen (APIs) erweitern kann.

9. Interaktionsvorrichtung nach einem der Ansprüche 1 bis 8, wobei externe Einrichtungen ein drahtloses oder drahtgebundenes LAN-System, eine Musikanlage, eine Alarmanlage, die Heizung eines Hauses/Zimmers, die Beleuchtungsanlage eines Hauses/Zimmers oder Netzwerkkomponenten in einer Cloud sein können, wobei über die Netzwerkkomponenten in der Cloud beispielsweise Sender auf einem Heim-TV oder Radio oder die Bandbreite des Internetzugangs gesteuert werden können.

10. Interaktionsvorrichtung nach einem der Ansprüche 1 bis 9, wobei die Interaktionsvorrichtung ferner eine Funktrigger-Empfangseinheit aufweist,
wobei die Funktrigger-Empfangseinheit:
mit der modularen Verarbeitungseinheit verbunden ist,
zum Empfang von Daten und/oder Triggern mittels drahtloser Nahbereichsfunktechnologie(n) ausgestaltet ist, und
zum Weiterleiten empfangener Daten und/oder Trigger an die modulare Verarbeitungseinheit ausgestaltet ist; und
wobei die modulare Verarbeitungseinheit ferner:
zum Erfassen, Analysieren und Verarbeiten der empfangenen Daten und/oder Trigger mittels der Software-Module ausgestaltet ist,
zum Senden von gegebenenfalls beim Verarbeiten der empfangenen Daten und/oder Trigger entstehenden Daten und/oder Trigger an die mindestens eine Schnittstelle ausgestaltet ist.

11. Interaktionsvorrichtung nach Anspruch 10,
wobei die drahtlose(n) Nahbereichsfunktechnologie(n) als Nahfeldkommunikation, auf Englisch Near Field Communication oder NFC, und/oder als RFID-Technologie, auf Englisch Radio-Frequency Identification, und/oder als Bluetooth, insbesondere Bluetooth 4.0, und/oder mittels zukünftiger Funktechnologien realisiert ist/sind, und
wobei die Funktrigger-Empfangseinheit ferner Hardwarekomponenten, beispielsweise eine Sensorik, zum Empfang von Signalen mittels der Nahbereichsfunktechnologie(n) aufweist.

12. Interaktionsvorrichtung nach Anspruch 10 oder 11,
wobei die Funktrigger-Empfangseinheit so ausgestaltet ist, dass ein Trigger ausgelöst wird, wenn die Funktrigger-Empfangseinheit einen zur Kommunikation mittels drahtloser Nahbereichsfunktechnologie(n) fähigen Interaktionsauslöser detektiert,
wobei der Interaktionsauslöser beispielsweise ein Smart Device, ein Smartphone, ein Mobiltelefon, ein Tablet Computer, ein mobiles Gadget oder ein Transponder, vorzugsweise ein RFID-Chip oder ein NFC-Tag, sein kann.

13. Interaktionsvorrichtung nach Anspruch 12,
wobei die Funktrigger-Empfangseinrichtung zum Erkennen einer Identifikationsnummer des Interaktionsauslösers ausgestaltet ist;
wobei einem Interaktionsauslöser ein oder mehrere Trigger zugeordnet sind; und
wobei der eine oder die mehreren einem Interaktionsauslöser zugeordneten Trigger nur dann ausgelöst wird/werden, wenn für den Interaktionsauslöser in der Interaktionsvorrichtung eine Identifikationsnummer hinterlegt ist.

14. Interaktionsvorrichtung nach Anspruch 13, wobei die Interaktionsvorrichtung so ausgestaltet ist, dass mittels der Identifikationsnummer eines Interaktionsauslösers gesteuert wird, welches der in der modularen Verarbeitungseinheit installierten Module angesprochen wird, sobald ein Interaktionsauslöser von der Funktrigger-Empfangseinrichtung erkannt wird; und
wobei, soweit dieser Anspruch abhängig ist von Anspruch 5, vorzugsweise die Interaktionsvorrichtung so ausgestaltet ist, dass mittels der Identifikationsnummer eines Interaktionsauslösers bestimmt wird, welcher Satz von Funktionen eines in der modularen Verarbeitungseinheit installierten Moduls angesprochen wird, sobald ein Interaktionsauslöser von der Funktrigger-Empfangseinrichtung erkannt wird.

15. Interaktionsvorrichtung nach einem der Ansprüche 1 bis 14, ferner aufweisend eine Ablage, beispielsweise eine schalenförmige Ablage, zum Ablegen von zum drahtlosen Laden geeigneten elektrischen Geräten und/oder, sofern dieser Anspruch abhängig ist von einem der Ansprüche 12 bis 14, zum Ablegen von Interaktionsauslösern.

## Claims

1. An interaction device comprising:
a charging unit (24);
a modular processing unit (26);
at least one interface (27, 28) for the interaction with external means;
wherein the charging unit is
connected to the modular processing unit,
configured to charge one or more electrical devices in a wireless manner,
configured to detect whether an electrical device suitable for wireless charging is located in a spatial area around the charging unit in which wireless charging of electrical devices by the charging unit is possible,
configured to send information to the modular processing unit as soon as an electrical device suitable for wireless charging has entered the spatial area around the charging unit in which wireless charging of electrical devices by the charging unit is possible or has been removed from this area,
wherein the modular processing unit is
configured as runtime environment for the software modules installed in the modular processing unit,
configured to receive, detect, analyze and process information sent by the charging unit to the modular processing unit by means of the software modules,
configured to send data and/or triggers optionally generated when processing said information to at least one interface; and
wherein the at least one interface is
connected to the modular processing unit,
configured to receive data and/or triggers sent by the modular processing unit, and
configured to transfer the data and/or triggers to at least one external means,
**characterized in that** the modular processing unit is configured to
dynamically activate and deactivate modules, and
install and uninstall during the ongoing operation.

2. The interaction device according to claim 1, wherein an electrical device suitable for wireless charging can be, for example, a smart device, smart phone, mobile phone, tablet computer and/or mobile gadget.

3. The interaction device according to claim 1 or 2,
wherein the charging unit is further configured to
receive control signals relating to a charging operation from the modular processing unit, wherein in particular starting and/or finishing the charging operation can be controlled by the control signals; and/or
send status information about current charging operations to the modular processing unit.

4. The interaction device according to any one of claims 1 to 3,
wherein the modular processing unit is arranged locally in the interaction device, or
wherein the modular processing unit is arranged partially locally and partially externally, preferably on an external server.

5. The interaction device according to any one of claims 1 to 4, wherein each of the modules installed in the modular processing unit comprises a set of functions for controlling the at least one external means.

6. The interaction device according to any one of claims 1 to 5, wherein at least one of the interfaces is configured as software interface (API) and/or at least one of the interfaces is configured as hardware interface.

7. The interaction device according to any one of claims 1 to 6,
wherein each of the connections between the interface(s) and the modular processing unit is bi-directional; and
wherein the interface(s) is/are configured to
receive data sent by the at least one external means and
transmit the data sent by the at least one external means to the modular processing unit.

8. The interaction device according to any one of claims 1 to 7, wherein each of the installed software modules can extend the interaction device by additional, preferably bi-directional, software interfaces (APIs).

9. The interaction device according to any one of claims 1 to 8, wherein external means for a wireless or wired LAN system can be a stereo, an alarm system, the heating unit of a house/room, the light system of a house/room or network components in a Cloud, wherein for example transmitters of a home TV set or a radio or the bandwidth of the internet access can be controlled via the network components in the Cloud.

10. The interaction device according to any one of claims 1 to 9, wherein the interaction device further comprises a radio trigger receiving unit,
wherein the radio trigger receiving unit is
connected to the modular processing unit,
configured to receive data and/or triggers by means of wireless near field radio technology/technologies, and
configured to transmit received data and/or triggers to the modular processing unit; and
wherein the modular processing unit is further
configured to detect, analyze and process the received data and/or triggers by means of the software modules,
configured to send data and/or triggers optionally generated when processing the received data and/or triggers to the at least one interface.

11. The interaction device according to claim 10,
wherein the wireless near field radio technology/technologies is/are realized as near field communication, NFC, and/or as radio frequency identification, RFID, technology and/or as Bluetooth, in particular Bluetooth 4.0, and/or by means of future radio technologies, and
wherein the radio trigger receiving unit further comprises hardware components, for example a sensor system, for receiving signals by means of the near field radio technology/technologies.

12. The interaction device according to claim 10 or 11,
wherein the radio trigger receiving unit is configured such that a trigger is triggered when the radio trigger receiving unit detects an interaction activator that is capable of communicating by means of wireless near field radio technology/technologies,
wherein the interaction activator can be, for example, a smart device, a smart phone, a mobile phone, a tablet computer, a mobile gadget or a transponder, preferably an RFID chip or an NFC tag.

13. The interaction device according to claim 12,
wherein the radio trigger receiving means is configured to detect an identification number of the interaction activator,
wherein one or more triggers are assigned to an interaction activator; and
wherein the one or more trigger(s) assigned to an interaction activator is/are only triggered when an identification number for the interaction activator is stored in the interaction device.

14. The interaction device according to claim 13, wherein the interaction device is configured such that it is controlled by means of the identification number of an interaction activator which of the modules installed in the modular processing unit is actuated as soon as an interaction activator is detected by the radio trigger receiving means; and
wherein, as far as this claim is dependent on claim 5, preferably the interaction device is configured such that it is determined by means of the identification number of an interaction activator which set of functions of a module installed in the processing unit is actuated as soon as an interaction activator is detected by the radio trigger receiving means.

15. The interaction device according to any one of claims 1 to 14, further comprising a tray, for example a saucer-type tray, for placing electrical devices suitable for wireless charging and/or, as far as this claim is dependent on any one of claims 12 to 14, for placing interaction activators.

## Revendications

1. Dispositif d'interaction, comprenant :
une unité de charge (24) ;
une unité de traitement modulaire (26) ;
au moins une interface (27, 28) pour l'interaction avec des dispositifs externes ;
où l'unité de charge :
est reliée à l'unité de traitement modulaire,
est prévue pour la charge sans fil d'un ou de plusieurs appareils électriques,
est prévue pour détecter si un appareil électrique adapté pour une charge sans fil se trouve dans une zone spatiale autour de l'unité de charge, où une charge sans fil d'appareils électriques par l'unité de charge est possible,
est prévue pour adresser une information à l'unité de traitement modulaire, dès qu'un appareil électrique adapté pour une charge sans fil parvient dans la zone spatiale autour de l'unité de charge, où une charge sans fil d'appareils électriques par l'unité de charge est possible, ou est retiré de cette zone ;
où l'unité de traitement modulaire :
est prévue comme environnement d'exécution pour des modules logiciels installés dans l'unité de traitement modulaire,
est prévue pour recevoir, saisir, analyser et traiter au moyen des modules logiciels des informations adressées par l'unité de charge à l'unité de traitement modulaire,
est prévue pour adresser à au moins une interface des données et/ou des déclencheurs éventuellement créés par traitement desdites informations ; et
où ladite au moins une interface :
est reliée à l'unité de traitement modulaire,
est prévue pour recevoir des données et/ou des déclencheurs adressés par l'unité de traitement modulaire, et
est prévue pour transmettre les données et/ou déclencheurs à au moins un dispositif externe ;
**caractérisé en ce que** l'unité de traitement modulaire est prévue :
pour l'activation et la désactivation dynamique de modules, et
pour l'installation et la désinstallation pendant le fonctionnement en cours.

2. Dispositif d'interaction selon la revendication 1, où un appareil électrique adapté pour une charge sans fil peut notamment être un appareil intelligent, un smartphone, un téléphone mobile, un ordinateur tablette et/ou un appareil mobile.

3. Dispositif d'interaction selon la revendication 1 ou la revendication 2,
où l'unité de charge est en outre prévue :
pour recevoir des signaux de commande relatifs à un processus de charge de l'unité de traitement modulaire, où les signaux de commande permettent notamment de commander le lancement et/ou l'arrêt du processus de charge ; et/ou
pour adresser des informations d'état sur des processus de charge en cours à l'unité de traitement modulaire.

4. Dispositif d'interaction selon l'une des revendications 1 à 3,
où l'unité de traitement modulaire est disposée localement dans le dispositif d'interaction, ou
où l'unité de traitement modulaire est disposée en partie localement et en partie extérieurement, préférentiellement sur un serveur externe.

5. Dispositif d'interaction selon l'une des revendications 1 à 4, où chacun des modules installés dans l'unité de traitement modulaire comprend un jeu de fonctions pour la commande dudit au moins un dispositif externe.

6. Dispositif d'interaction selon l'une des revendications 1 à 5, où au moins une des interfaces est prévue comme interface logicielle (API) et/ou au moins une des interfaces est prévue comme interface matérielle.

7. Dispositif d'interaction selon l'une des revendications 1 à 6,
où la liaison de l'interface ou des interfaces avec l'unité de traitement modulaire est bidirectionnelle ; et
où l'interface ou les interfaces sont prévues :
pour recevoir des données adressées par ledit au moins un dispositif externe, et
pour transmettre les données adressée par ledit au moins un dispositif externe à l'unité de traitement modulaire.

8. Dispositif d'interaction selon l'une des revendications 1 à 7, où chacun des modules logiciels installés peut étendre le dispositif d'interaction à des interfaces logicielles (API), préférentiellement bidirectionnelles.

9. Dispositif d'interaction selon l'une des revendications 1 à 8, où les dispositifs externes peuvent être un système LAN avec fil ou sans fil, une installation de musique, une installation d'alarme, le chauffage d'une maison/d'une pièce, l'installation d'éclairage d'une maison/d'une pièce ou des composants réseau d'un nuage, des stations sur une télévision ou radio domestique ou la largeur de bande de l'accès Internet pouvant notamment être commandés au moyen des composants réseau du nuage.

10. Dispositif d'interaction selon l'une des revendications 1 à 9, ledit dispositif d'interaction comprenant en outre une unité réceptrice à déclencheur radio sans fil, ladite unité réceptrice à déclencheur radio sans fil :
étant reliée à l'unité de traitement modulaire,
étant prévue pour recevoir des données et/ou des déclencheurs au moyen d'une ou de plusieurs technologies de communication en champ proche sans fil, et
étant prévue pour transmettre les données et/ou les déclencheurs reçus à l'unité de traitement modulaire ; et
où l'unité de traitement modulaire :
est en outre prévue pour saisir, analyser et traiter les données et/ou les déclencheurs reçus au moyen des modules logiciels,
pour adresser à ladite au moins une interface des données et/ou des déclencheurs éventuellement créés par traitement des données et/ou des déclencheurs reçus.

11. Dispositif d'interaction selon la revendication 10,
où la ou les technologies de communication en champ proche sans fil sont réalisées comme communication en champ proche, anglais : Near Field Communication ou NFC, et/ou comme technologie de radio-identification, anglais : Radio-Frequency Identification,
et/ou comme Bluetooth, en particulier Bluetooth 4.0, et/ou au moyen de technologies radio futures, et
où l'unité réceptrice à déclencheur radio sans fil comprend en outre des composants matériels tels qu'un système de capteurs pour la réception de signaux au moyen de la ou des technologies de communication en champ proche.

12. Dispositif d'interaction selon la revendication 10 ou la revendication 11,
où l'unité réceptrice à déclencheur radio sans fil est prévue de manière à déclencher un déclencheur si l'unité réceptrice à déclencheur radio sans fil détecte un déclencheur d'interaction apte à la communication par une ou plusieurs technologies de communication en champ proche sans fil,
où le déclencheur d'interaction peut notamment être un appareil intelligent, un smartphone, un téléphone mobile, un ordinateur tablette, un appareil mobile ou un transpondeur, préférentiellement une puce RFID ou une étiquette NFC.

13. Dispositif d'interaction selon la revendication 12,
où l'unité réceptrice à déclencheur radio sans fil est prévue pour reconnaître un numéro d'identification du déclencheur d'interaction ;
où un ou plusieurs déclencheurs sont associés à un déclencheur d'interaction ; et
où le ou les déclencheurs associés à un déclencheur d'interaction ne sont déclenchés que si un numéro d'identification est mémorisé dans le dispositif d'interaction pour le déclencheur d'interaction.

14. Dispositif d'interaction selon la revendication 13, ledit dispositif d'interaction étant prévu de manière à commander au moyen du numéro d'identification d'un déclencheur d'interaction un module qui sera activé parmi les modules installés dans l'unité de traitement modulaire, dès qu'un déclencheur d'interaction est reconnu par l'unité réceptrice à déclencheur radio sans fil ; et,
si la présente revendication est dépendante de la revendication 5, ledit dispositif d'interaction étant préférentiellement prévu pour déterminer au moyen du numéro d'identification d'un déclencheur d'interaction le jeu de fonctions d'un module installé dans l'unité de traitement modulaire qui sera activé dès qu'un déclencheur d'interaction est reconnu par l'unité réceptrice à déclencheur radio sans fil.

15. Dispositif d'interaction selon l'une des revendications 1 à 14, comprenant en outre une réception, telle qu'une réception en forme de coque pour le dépôt d'appareils électriques adaptés pour une charge sans fil et/ou, si la présente revendication est dépendante d'une des revendications 12 à 14, pour le dépôt de déclencheurs d'interaction.
